# EUROPÄISCHE PATENTSCHRIFT

(11) **EP 4 530 773 B1**
(45) Veröffentlichungstag und Bekanntmachung des Hinweises auf die Patenterteilung: **28.10.2026**
(21) Anmeldenummer: 23199870.9
(22) Anmeldetag: 26.09.2023
(51) Int. Cl.: G05B 19/418

(54) **WERKZEUGKETTE, KETTENWERKZEUG, VERFAHREN ZUM IDENTIFIZIEREN EINER EIGENSCHAFT EINER WERKZEUGKETTE UND SYSTEM ZUM IDENTIFIZIEREN EINER EIGENSCHAFT EINER WERKZEUGKETTE**
TOOL CHAIN, CHAIN TOOL, METHOD FOR IDENTIFYING A PROPERTY OF A TOOL CHAIN, AND SYSTEM FOR IDENTIFYING A PROPERTY OF A TOOL CHAIN
CHAÎNE D'OUTILS, OUTIL DE CHAÎNE, PROCÉDÉ D'IDENTIFICATION D'UNE PROPRIÉTÉ D'UNE CHAÎNE D'OUTILS ET SYSTÈME D'IDENTIFICATION D'UNE PROPRIÉTÉ D'UNE CHAÎNE D'OUTILS

(43) Veröffentlichungstag der Anmeldung: 02.04.2025
(73) Patentinhaber: Andreas Stihl AG & Co. KG, 71336 Waiblingen (DE)
(72) Erfinder: Grams, Tobias, 71332 Waiblingen (DE)
(74) Vertreter: Patentanwälte Ruff, Wilhelm, Beier, Dauster & Partner mbB

(56) Entgegenhaltungen:
- EP-A1- 3 757 697
- DE-T2- 69 723 498
- US-A- 6 003 423
- US-A1- 2020 030 898

## Beschreibung

### ANWENDUNGSGEBIET UND STAND DER TECHNIK

Die Erfindung bezieht sich auf eine Werkzeugkette, ein Kettenwerkzeug aufweisend eine solche Werkzeugkette, ein Verfahren zum Identifizieren einer Eigenschaft einer solchen Werkzeugkette und ein System zum Identifizieren einer Eigenschaft einer solchen Werkzeugkette.

Die US 6 003 423 A offenbart eine Sägekette für eine Kettensäge, die einen Identifizierungscode hat, der in eines ihrer Glieder eingeprägt ist, um die Auswahl einer Ersatzkette zu erleichtern. Zudem behandelt die DE 697 23 498 T2 Kettensägen und insbesondere Schwerter mit farbcodierten Anzeigemitteln für die Abstimmung von Schwertern auf andere Kettensägenkomponenten. Aus der US 2020/030898 A1 geht eine Feile zum Feilen eines Sägezahns einer Sägekette hervor. Ferner betrifft die EP 3 757 697 A1 eine elektronische Vorrichtung und ein Verfahren zur Verwaltung der Verfolgbarkeit eines Schneidwerkzeugs.

### AUFGABE UND LÖSUNG

Der Erfindung liegt als Aufgabe die Bereitstellung einer Werkzeugkette zugrunde, wobei die Werkzeugkette eine Identifizierung einer Eigenschaft der Werkzeugkette ermöglicht. Des Weiteren liegt der Erfindung als Aufgabe die Bereitstellung eines Kettenwerkzeugs aufweisend eine solche Werkzeugkette, ein Verfahren zum Identifizieren einer Eigenschaft einer solchen Werkzeugkette und ein System zum Identifizieren einer Eigenschaft einer solchen Werkzeugkette zugrunde.

Die Erfindung löst diese Aufgabe durch die Bereitstellung einer Werkzeugkette mit den Merkmalen des Anspruchs 1. Des Weiteren löst die Erfindung diese Aufgabe durch die Bereitstellung eines Kettenwerkzeugs mit den Merkmalen des Anspruchs 10, eines Verfahrens mit den Merkmalen des Anspruchs 12 und/oder eines Systems mit den Merkmalen des Anspruchs 13.

Vorteilhafte Weiterbildungen und/oder Ausgestaltungen der Erfindung sind in den abhängigen Ansprüchen beschrieben.

Die erfindungsgemäße Werkzeugkette umfasst bzw. weist eine Mehrzahl von räumlich aneinandergereihten bzw. aufeinanderfolgenden Kettengliedern auf. Die Mehrzahl von Kettengliedern umfasst bzw. weist mindestens zwei markierte, insbesondere gekennzeichnete, Kettenglieder auf. Die markierten Kettenglieder umfassen bzw. weisen jeweils, insbesondere mindestens, eine Information, insbesondere ein Informationszeichen, auf. Mindestens, insbesondere nur, eine räumliche Reihenfolge der, insbesondere jeweiligen, Informationen zusammen bzw. gemeinsam bestimmt bzw. definiert eine logische Reihenfolge mindestens, insbesondere nur, der Informationen. Die logische Reihenfolge mindestens der Informationen bildet bzw. definiert eine Gesamtinformation, insbesondere eine Gesamtkennzeichnung, zur Identifizierung einer Eigenschaft, insbesondere eines Werts der Eigenschaft, der Werkzeugkette.

Dies ermöglicht, dass die Gesamtinformation komplex sein bzw. einen hohen Informationsgehalt aufweisen bzw. haben kann. Dies ermöglicht, dass die Eigenschaft der Werkzeugkette eindeutig und/oder gut identifiziert werden kann.

Insbesondere kann die Werkzeugkette für ein, insbesondere handgeführtes und/oder motorangetriebenes, Kettenwerkzeug ausgebildet sein. Zusätzlich oder alternativ kann die Werkzeugkette zur Bearbeitung eines Werkstücks ausgebildet sein.

Die Mehrzahl von Kettengliedern kann miteinander mechanisch verbunden sein. Zusätzlich oder alternativ kann die Werkzeugkette geschlossen oder eine Endloskette sein.

Die Informationen können optisch erfassbar, insbesondere sichtbar und/oder lesbar, sein, insbesondere an Außenseiten der markierten Kettenglieder bzw. von außen bzw. ohne Demontage der Werkzeugkette. Zusätzlich oder alternativ können die Informationen gleich oder verschieden sein.

Die räumliche Reihenfolge der Informationen kann durch eine räumliche Aneinanderreihung bzw. eine räumliche Reihenfolge der Kettenglieder bestimmt sein. Zusätzlich oder alternativ können/kann die räumliche Reihenfolge und/oder die logische Reihenfolge mindestens der Informationen als Informationskette, insbesondere Informationszeichenkette, bezeichnet werden.

Gemäß der Erfindung ist die Eigenschaft ein Typ und/oder ein Wert der Mehrzahl der Kettenglieder und/oder eine Länge und/oder eine Echtheit der Werkzeugkette. Der Typ und/oder der Wert der Mehrzahl der Kettenglieder und/oder die Länge der Werkzeugkette ermöglichen/ermöglicht eine Wartung, eine Reparatur und/oder einen Ersatz der Werkzeugkette und/oder durch die Werkzeugkette. Zusätzlich oder alternativ ermöglicht die Echtheit eine Authentifizierung der Werkzeugkette bzw. einen Nachweis, dass es sich bei der Werkzeugkette um ein Original handelt. Somit ermöglicht dies eine Funktion und/oder eine Betriebssicherheit der Werkzeugkette zu gewährleisten. Insbesondere ermöglicht die komplexe Gesamtinformation ein hohes Fälschungshindernis der Werkzeugkette. Zusätzlich oder alternativ kann die Gesamtinformation, insbesondere jeweils, einmalig sein bzw. für verschiedene Werkzeugketten desselben Typs, insbesondere jeweils, verschieden sein. Weiter zusätzlich oder alternativ kann die Gesamtinformation durch Zufall erzeugt, insbesondere montiert, oder weitergesetzt, insbesondere hochgezählt, sein. Weiter zusätzlich oder alternativ kann Identifizierung der Echtheit als Authentifizierung bezeichnet werden.

Gemäß der Erfindung bildet die, insbesondere jede, Information des, insbesondere jedes, markierten Kettenglieds alleine bzw. einzeln keine Gesamtinformation zur Identifizierung der Eigenschaft. Dies ermöglicht viel Platz für die Information. Insbesondere können, insbesondere alle, die markierten Kettenglieder jeweils nur ein einziges Informationszeichen aufweisen.

In einer Weiterbildung der Erfindung ist die, insbesondere jede, Information, insbesondere das mindestens eine Informationszeichen, minimal 0,5-mal so hoch wie das, insbesondere jeweilige, markierte Kettenglied. Zusätzlich oder alternativ ist die, insbesondere jede, Information, insbesondere das mindestens eine Informationszeichen, minimal 0,5 Zentimeter (cm) hoch. Dies ermöglicht eine gute optische Erfassbarkeit der Information. Insbesondere kann die Information maximal so hoch wie das markierte Kettenglied sein. Zusätzlich oder alternativ kann die Information maximal 5 cm, insbesondere maximal 2 cm, hoch sein. Weiter zusätzlich oder alternativ kann hoch in einer Richtung orthogonal zu einer Reihen- und/oder Bewegungsrichtung der Werkzeugkette sein.

In einer Weiterbildung der Erfindung ist die, insbesondere jede, Information, insbesondere das mindestens eine Informationszeichen, in das, insbesondere jeweils, markierte Kettenglied eingeprägt oder eingelasert. Dies ermöglicht eine gute Haltbarkeit bzw. einen guten Schutz der Information gegen Verschleiß durch Bearbeitung mittels der Werkzeugkette, insbesondere im Unterschied zu einer aufgeklebten und/oder aufgedruckten Information. Somit ermöglicht dies eine gute optische Erfassbarkeit der Information.

In einer Weiterbildung der Erfindung ist bzw. enthält die, insbesondere jede, Information mindestens ein Schriftzeichen, insbesondere ein Zahlzeichen und/oder ein Buchstabe, und/oder mindestens ein Symbol und/oder mindestens ein Code, insbesondere ein 2D-Code, insbesondere ein DataMatrix-Code. Insbesondere kann das Zahlzeichen mehrstellig und/oder hexadezimal sein. Zusätzlich oder alternativ kann das Symbol ein Dreieck und/oder einen Kreis aufweisen, insbesondere sein.

In einer Weiterbildung der Erfindung umfasst bzw. weist die Mehrzahl von Kettengliedern verschiedene Typen von Kettengliedern, insbesondere Treibglieder, Verbindungsglieder, Nietglieder und/oder Schneidglieder, auf. Insbesondere alle, die markierten Kettenglieder sind gleichen Typs, insbesondere Verbindungsglieder. Zusätzlich oder alternativ umfassen bzw. weisen minimal 20 Prozent (%), insbesondere minimal 90 %, insbesondere 100%, der Kettenglieder eines der Typen, insbesondere der Verbindungsglieder, jeweils eine Information auf. Dies ermöglicht eine einfache Herstellung der Werkzeugkette. Zusätzlich oder alternativ ermöglichen die Verbindungsglieder eine gute Haltbarkeit bzw. einen guten Schutz der Informationen gegen Verschleiß und/oder eine gute optische Erfassbarkeit der Informationen. Insbesondere können, insbesondere in einer Reihen- und/oder Bewegungsrichtung der Werkzeugkette, rechte Kettenglieder und, insbesondere in der Reihenrichtung, linke Kettenglieder verschiedene Typen von Kettengliedern sein. Insbesondere können die markierten Kettenglieder rechte Verbindungsglieder sein. Zusätzlich oder alternativ weisen minimal 20 %, insbesondere minimal 90 %, insbesondere 100%, der rechten Verbindungsglieder jeweils eine Information auf.

Zweckmäßigerweise kann ein als Nietglied ausgebildetes Kettenglied einen Niet aufweisen oder ein Niet sein, der einander gegenüberliegende, beispielsweise pilzförmig, verbreiterte Nietköpfe aufweist. Wenigstens einer der Nietköpfe kann zum Verbinden anderer Kettenglieder umformend verbreitert sein, insbesondere durch Vernieten, insbesondere zeitlich nach einem Anordnen zu verbindender Kettenglieder in Montageposition.

Wenn das markierte Kettenglied ein Nietglied ist, kann die, insbesondere jede, Information, insbesondere das mindestens eine Informationszeichen, an wenigstens einem der Nietköpfe dieses Nietglieds vorhanden sein. Die an dem Nietkopf vorhandene Information bzw. das an dem Nietkopf vorhandene Informationszeichen kann einer Nietkopfformgebung des Nietkopfs, insbesondere einem Nietkopfdetail des Nietkopfs, entsprechen. Die Nietkopfformgebung des Nietkopfs kann zeitlich nach oder zeitlich vor einem Anordnen zu verbindender Kettenglieder in Montageposition und/oder zeitlich vor oder zeitlich nach dem Vernieten erzeugt sein.

Zweckmäßigerweise kann ein als Treibglied ausgebildetes Kettenglied Vertiefungen, insbesondere Kalotten, zur Schmiermittelaufnahme aufweisen. Eine derartige Vertiefung zur Schmiermittelaufnahme kann synonym auch als Schmiermitteltasche bezeichnet werden.

Wenn das markierte Kettenglied ein Treibglied ist, kann in Ausgestaltung der Erfindung die, insbesondere jede, Information, insbesondere das mindestens eine Informationszeichen, einer Anzahl und/oder einer Formation der Vertiefungen dieses Treibglieds entsprechen.

Zweckmäßig weist die Werkzeugkette, insbesondere wenigstens an ihren Treibglieder, einen Führungsbereich auf. In, insbesondere zur vorstehenden Ausgestaltung alternativen, Ausgestaltung der Erfindung ist der Führungsbereich frei von Informationen, insbesondere Informationszeichen. Insbesondere in diesem Fall können etwaige Markierungen und/oder Vertiefungen zur Schmiermittelaufnahme im Bereich des Führungsbereichs keine Informationen, insbesondere Informationszeichen für die räumliche Reihenfolge darstellen. Der Führungsbereich kann an einer Führungsschiene eines Kettenwerkzeugs führbar sein, insbesondere wenn die Werkzeugkette von dem Kettenwerkzeug aufgewiesen ist. Wenn die Werkzeugkette an der Führungsschiene geführt ist, kann der Führungsbereich der Werkzeugkette durch die Führungsschiene verdeckt sein. Mit anderen Worten: Die Informationen, insbesondere die Informationszeichen, können derart außerhalb des Führungsbereichs vorhanden sein, dass sie auch bei an dem Kettenwerkzeug montierter und/oder an der Führungsschiene geführter Werkzeugkette erfassbar sind. Insbesondere können zur Schmiermittelaufnahme dienende Vertiefungen, insbesondere Kalotten, von Treibgliedern der Werkzeugkette verdeckt sein, wenn die Werkzeugkette von dem Kettenwerkzeug aufgewiesen und/oder an der Führungsschiene geführt ist. Falls die Werkzeugkette als Endloskette ausgebildet ist kann der Führungsbereich insbesondere radial innen angeordnet sein.

Gemäß der Erfindung bestimmt die räumliche Reihenfolge der Informationen und mindestens ein Abstand, insbesondere eine Anzahl von unmarkierten bzw. ungekennzeichneten Kettengliedern, insbesondere des gleichen Typs wie die markierten Kettenglieder, zwischen den markierten Kettengliedern, insbesondere jeweils zwei der markierten Kettengliedern, und/oder mindestens eine Position der Information, insbesondere des mindestens einen Informationszeichens, auf dem markierten Kettenglied zusammen die logische Reihenfolge der Informationen und des mindestens einen Abstands und/oder der mindestens einen Position. Die logische Reihenfolge der Informationen und des mindestens einen Abstands und/oder der mindestens einen Position bildet die Gesamtinformation. Dies ermöglicht, dass die Gesamtinformation besonders komplex sein bzw. einen besonders hohen Informationsgehalt aufweisen kann.

Insbesondere kann die Mehrzahl von Kettengliedern mindestens zwei markierte Kettenglieder aufweisen. Zusätzlich oder alternativ können die Informationen, insbesondere die Informationszeichen, aus einer, insbesondere definierten, Menge von mindestens zwei verschiedenen Informationen, insbesondere Informationszeichen, sein.

In einer Weiterbildung der Erfindung umfasst bzw. weist die Mehrzahl von Kettengliedern mindestens acht markierte Kettenglieder auf. Zusätzlich oder alternativ sind die Informationen, insbesondere die Informationszeichen, aus einer, insbesondere definierten, Menge von mindestens acht verschiedenen Informationen, insbesondere Informationszeichen. Dies ermöglicht besonders viele Möglichkeiten für die Gesamtinformation, insbesondere ihren Informationsgehalt. Insbesondere kann die Menge als Zeichensatz bezeichnet werden.

Zweckmäßig sind die Informationen, insbesondere die Informationszeichen, aus wenigstens zwei, insbesondere definierten, Mengen von je mindestens zwei verschiedenen Informationen, insbesondere Informationszeichen. Die Mengen können als verschiedene Zeichensätze bezeichnet werden. Die wenigstens zwei Mengen können jeweils einen Zeichentyp für ihre Informationen, insbesondere Informationszeichen, gemein haben. Ein solcher Zeichentypen kann Schriftzeichen, insbesondere Zahlzeichen und/oder Buchstaben, umfassen. Alternativ oder zusätzlich kann ein, insbesondere anderer, Zeichentyp Codes, insbesondere 2D-Codes, insbesondere DataMatrix-Codes, umfassen. Alternativ oder zusätzlich kann ein, insbesondere anderer, Zeichentyp Nietkopfformgebungen, insbesondere Nietkopfdetails, umfassen. Alternativ oder zusätzlich kann ein, insbesondere anderer, Zeichentyp Anzahlen und/oder Formationen von Vertiefungen, insbesondere Kalotten, zur Schmiermittelaufnahme umfassen. Es versteht sich, dass alternative oder zusätzliche, insbesondere andere, Zeichentypen vorgesehen sein können. Die Informationen aus wenigstens zwei Mengen können eine gemeinsame räumliche Reihenfolge und/oder parallele räumliche Reihenfolgen ausbilden. Auf diese Weise kann eine besonders hohe Informationsdichte erreicht werden, insbesondere mit Bezug auf einen limitierten Erfassungsbereich, insbesondere einer Erfassungseinrichtung zum Erfassen der mindestens räumlichen Reihenfolge.

In einer Weiterbildung der Erfindung ist die Werkzeugkette eine Schneidkette, insbesondere eine Sägekette. Für eine solche Werkzeugkette ist eine Gewährleistung einer Funktion und/oder einer Betriebssicherheit besonders vorteilhaft.

In einer Weiterbildung der Erfindung bestimmt mindestens die räumliche Reihenfolge der Informationen, insbesondere nur, auf einer, insbesondere einzigen, gemeinsamen Seite, insbesondere Außenseite, der Werkzeugkette die logische Reihenfolge mindestens der Informationen. In anderen Worten: insbesondere alle, die Informationen, insbesondere die Informationszeichen, sind auf der gemeinsamen Seite der Werkzeugkette, insbesondere räumlich, angeordnet. Dies ermöglicht ein einfaches optisches Erfassen, insbesondere mittels nur einer einzigen Bilds.

Das erfindungsgemäße Kettenwerkzeug umfasst bzw. weist eine, insbesondere die, Werkzeugkette wie zuvor beschrieben auf. Insbesondere ist das Kettenwerkzeug ein handgeführtes, insbesondere handgetragenes, und/oder motorangetriebenes Kettenwerkzeug. Insbesondere können die Informationen optisch erfassbar, insbesondere sichtbar und/oder lesbar, sein, insbesondere von außen bzw. ohne Demontage des Kettenwerkzeugs. Zusätzlich oder alternativ kann handgeführtes, insbesondere handgetragenes, Kettenwerkzeug bedeuten, dass das Kettenwerkzeug eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Weiter zusätzlich oder alternativ kann das Kettenwerkzeug ein Antriebsmotorsystem zum Antrieb bzw. zur Bewegung der Werkzeugkette aufweisen.

In einer Weiterbildung der Erfindung ist das Kettenwerkzeug ein Garten-, Forst- und/oder Bau-Kettenwerkzeug, insbesondere ein Schneidwerkzeug, insbesondere eine Kettensäge.

Das erfindungsgemäße, insbesondere automatische, Verfahren ist zum, insbesondere automatischen, Identifizieren einer, insbesondere der, Eigenschaft einer, insbesondere der, Werkzeugkette wie zuvor beschrieben und/oder einer, insbesondere der, Werkzeugkette aufgewiesen von einem, insbesondere dem, Kettenwerkzeug wie zuvor beschrieben ausgebildet bzw. konfiguriert. Das Verfahren umfasst bzw. weist die Schritte auf: a) Erfassen, insbesondere automatisches und/oder optisches Erfassen, mindestens der räumlichen Reihenfolge der Informationen. b) Bestimmen, insbesondere automatisches Bestimmen, der logischen Reihenfolge mindestens der Informationen basierend auf mindestens der erfassten räumlichen Reihenfolge der Informationen, wobei die logische Reihenfolge mindestens der Informationen die Gesamtinformation zur Identifizierung der Eigenschaft der Werkzeugkette bildet. c) Identifizieren, insbesondere automatisches Identifizieren, der Eigenschaft der Werkzeugkette basierend auf der gebildeten Gesamtinformation. Insbesondere kann der Schritt b) zeitlich nach dem Schritt a) aufgeführt werden. Zusätzlich oder alternativ kann der Schritt c) zeitlich nach dem Schritt b) ausgeführt werden.

Zweckmäßig kann bei Durchführung von Schritt b) und/oder Schritt c) eine mehrstufige Datenbankabfrage erfolgen. Insbesondere kann die mehrstufige Datenbankabfrage eine erste Abfragestufe und eine zeitlich auf die erste Abfragestufe folgende zweite Abfragestufe umfassen. Die Abfragestufen können sich hinsichtlich einer Komplexität und/oder Erfassungsgeschwindigkeit der gemäß Schritt a) erfassten Informationen, insbesondere Informationszeichen, unterscheiden. So kann in der ersten Abfragestufe die Datenbankabfrage für Informationen, insbesondere Informationszeichen, erfolgen, die schnell erfassbar sind und/oder eine relativ geringe Komplexität aufweisen. In der zweiten Abfragestufe kann die Datenbankabfrage für Informationen, insbesondere Informationszeichen, erfolgen, die weniger schnell erfassbar und/oder komplexer sind als die in der ersten Abfragestufe behandelten Informationen, insbesondere Informationszeichen. Beispielsweise können Schriftzeichen, insbesondere Zahlzeichen und/oder Buchstaben, schneller erfassbar und/oder weniger komplex sein als die Formation von Vertiefungen, insbesondere Kalotten, zur Schmiermittelaufnahme.

Das erfindungsgemäße, insbesondere elektrische, System ist zum, insbesondere automatischen, Identifizieren einer, insbesondere der, Eigenschaft einer, insbesondere der, Werkzeugkette wie zuvor beschrieben und/oder einer, insbesondere der, Werkzeugkette aufgewiesen von einem, insbesondere dem, Kettenwerkzeug wie zuvor beschrieben ausgebildet bzw. konfiguriert. Das System umfasst bzw. weist eine, insbesondere elektrische und/oder optische, Erfassungseinrichtung, eine, insbesondere elektrische, Bestimmungseinrichtung und eine, insbesondere elektrische, Identifizierungseinrichtung auf. Die Erfassungseinrichtung ist zum, insbesondere automatischen und/oder optischen, Erfassen der mindestens räumlichen Reihenfolge der Informationen ausgebildet bzw. konfiguriert. Die Bestimmungseinrichtung ist zum, insbesondere automatischen, Bestimmen der logischen Reihenfolge mindestens der Informationen basierend auf mindestens der erfassten räumlichen Reihenfolge der Informationen ausgebildet bzw. konfiguriert, wobei die logische Reihenfolge mindestens der Informationen die Gesamtinformation zur Identifizierung der Eigenschaft der Werkzeugkette bildet. Die Identifizierungseinrichtung ist zum, insbesondere automatischen, Identifizieren der Eigenschaft der Werkzeugkette basierend auf der gebildeten Gesamtinformation ausgebildet bzw. konfiguriert. Insbesondere kann das System zum Ausführen eines, insbesondere des, Verfahrens wie zuvor beschrieben ausgebildet sein. Zusätzlich oder alternativ kann das System getrennt von der Werkzeugkette und/oder dem Kettenwerkzeug ausgebildet sein. Weiter zusätzlich oder alternativ kann die Erfassungseinrichtung eine Kamera, insbesondere eine Digitalkamera aufweisen, insbesondere sein. Weiter zusätzlich oder alternativ kann die Bestimmungseinrichtung eine Recheneinrichtung aufweisen, insbesondere sein. Weiter zusätzlich oderalternativ kann die Identifizierungseinrichtung eine Recheneinrichtung und/oder eine Speichereinrichtung, insbesondere eine Datenbank, aufweisen. Insbesondere kann in der Identifizierungseinrichtung der Eigenschaft der Werkzeugkette die Gesamtinformation zugeordnet sein, insbesondere durch einen Hersteller, insbesondere ein Originalhersteller, der Werkzeugkette. Weiter zusätzlich oder alternativ kann das System ein mobiles, insbesondere portables bzw. handgetragenes, Gerät aufweisen, wobei das Gerät mindestens teilweise die Erfassungseinrichtung, die Bestimmungseinrichtung und/oder die Identifizierungseinrichtung aufweisen kann. Insbesondere kann das mobile Gerät ein Smartphone und/oder eine Smartwatch aufweisen, insbesondere sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht einer Außenseite einer erfindungsgemäßen Werkzeugkette,
- Fig. 2: eine schematische Ansicht einer Oberseite der Werkzeugkette der Fig. 1,
- Fig. 3: eine schematische Ansicht einer gegenüberliegenden Außenseite der Werkzeugkette der Fig. 1,
- Fig. 4: eine schematische Ansicht eines erfindungsgemäßen Verfahrens und eines erfindungsgemäßen Systems,
- Fig. 5: eine schematische Ansicht eines erfindungsgemäßen Kettenwerkzeugs aufweisend die Werkzeugkette der Fig. 1,
- Fig. 6: eine schematische Ansicht einer Außenseite einer weiteren erfindungsgemäßen Werkzeugkette, und
- Fig. 7: eine schematische Ansicht eines Treibglieds für die Werkzeugkette nach Fig. 1.

### DETAILLIERTE BESCHREIBUNG DER AUSFÜHRUNGSBEISPIELE

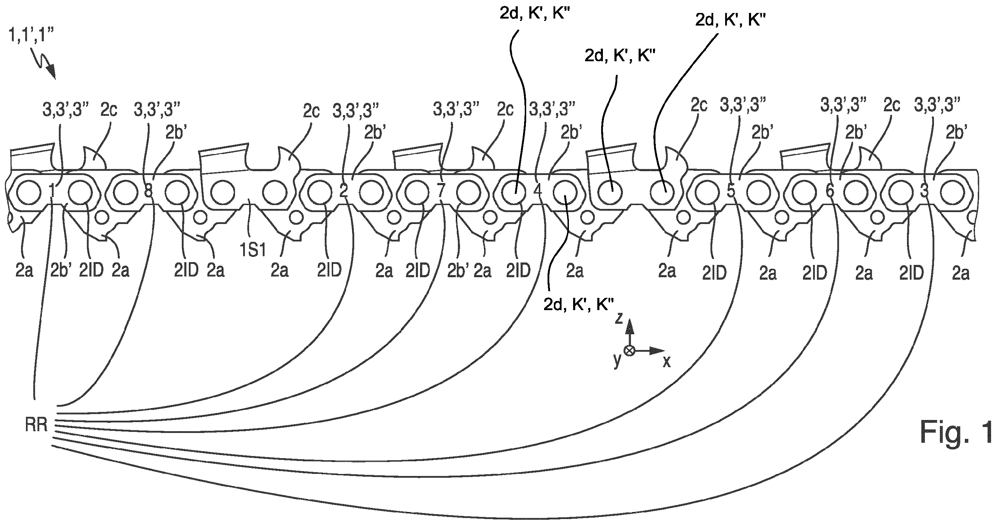

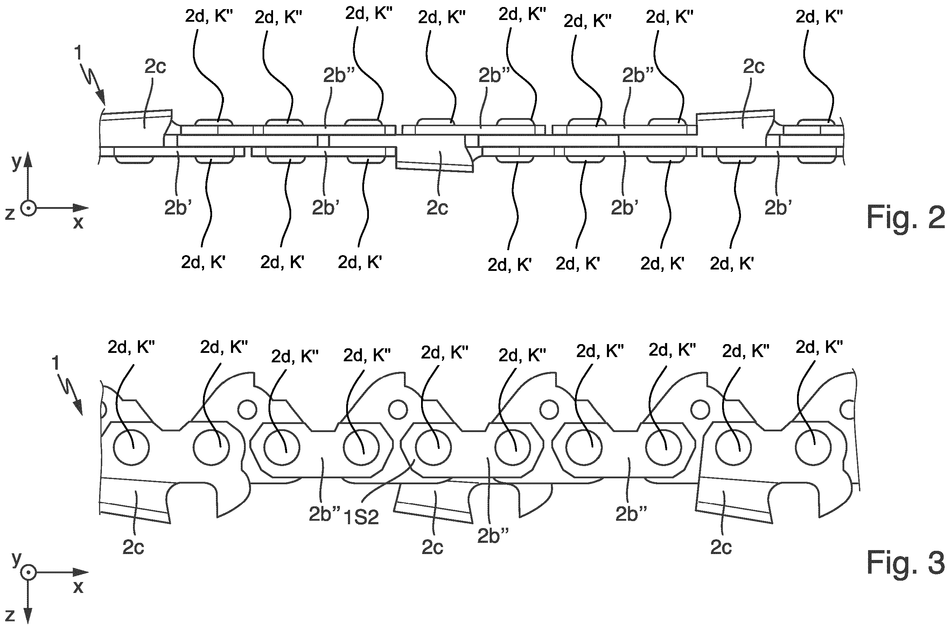

Fig. 1 bis 5 und 6 zeigen, insbesondere jeweils, eine erfindungsgemäße Werkzeugkette 1. Die Werkzeugkette 1 weist eine Mehrzahl von räumlich aneinandergereihten Kettengliedern 2 auf. Die Mehrzahl von Kettengliedern 2 weist mindestens zwei markierte Kettenglieder 2ID auf. Die markierten Kettenglieder 2ID weisen jeweils eine Information 3 auf. Mindestens, in Fig. 1 bis 5 nur, eine räumliche Reihenfolge RR der Informationen zusammen bestimmt eine logische Reihenfolge LR mindestens, in Fig. 1 bis 5 nur, der Informationen 3. Die logische Reihenfolge LR mindestens der Informationen 3 bildet eine Gesamtinformation ID zur Identifizierung einer Eigenschaft EI der Werkzeugkette 1.

Im Detail ist die Werkzeugkette 1 eine Schneidkette 1', insbesondere eine Sägekette 1".

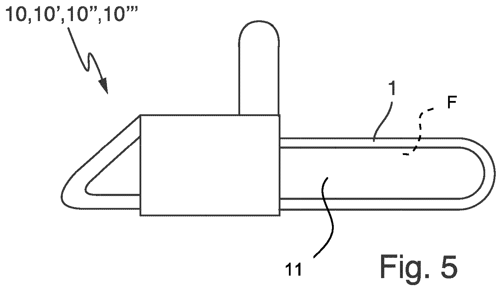

Des Weiteren zeigt Fig. 5 ein erfindungsgemäßes Kettenwerkzeug 10. Das Kettenwerkzeug 10 weist die Werkzeugkette 1 auf.

Insbesondere ist das Kettenwerkzeug 10 ein handgeführtes und/oder motorangetriebenes Kettenwerkzeug.

Im Detail ist das Kettenwerkzeug 10 ein Garten-, Forst- und/oder Bau-Kettenwerkzeug 10', insbesondere ein Schneidwerkzeug 10", insbesondere eine Kettensäge 10‴.

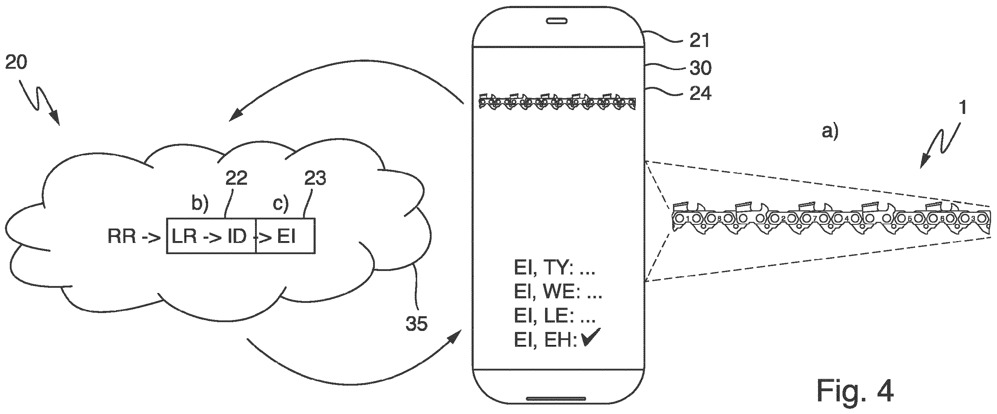

Außerdem zeigen Fig. 4 ein erfindungsgemäßes System 20 und ein erfindungsgemäßes Verfahren zum Identifizieren der Eigenschaft EI der Werkzeugkette 1, insbesondere aufgewiesen von dem Kettenwerkzeug 10.

Das System 20 weist eine Erfassungseinrichtung 21, eine Bestimmungseinrichtung 22 und eine Identifizierungseinrichtung 23 auf. Die Erfassungseinrichtung 21 ist zum Erfassen der mindestens räumlichen Reihenfolge RR der Informationen 3 ausgebildet. Die Bestimmungseinrichtung 22 ist zum Bestimmen der logischen Reihenfolge LR mindestens der Informationen 3 basierend auf mindestens der erfassten räumlichen Reihenfolge RR der Informationen 3 ausgebildet, wobei die logische Reihenfolge LR mindestens der Informationen 3 die Gesamtinformation ID zur Identifizierung der Eigenschaft EI der Werkzeugkette 1 bildet. Die Identifizierungseinrichtung 23 ist zum Identifizieren der Eigenschaft EI der Werkzeugkette 1 basierend auf der gebildeten Gesamtinformation ID ausgebildet.

Das Verfahren weist die Schritte auf: a) Erfassen mindestens der räumlichen Reihenfolge RR der Informationen 3, insbesondere mittels der Erfassungseinrichtung 21. b) Bestimmen der logischen Reihenfolge LR mindestens der Informationen 3 basierend auf mindestens der erfassten räumlichen Reihenfolge RR der Informationen 3, insbesondere mittels der Bestimmungseinrichtung 22, wobei die logische Reihenfolge LR mindestens der Informationen 3 die Gesamtinformation ID zur Identifizierung der Eigenschaft EI der Werkzeugkette 1 bildet. c) Identifizieren der Eigenschaft EI der Werkzeugkette 1 basierend auf der gebildeten Gesamtinformation ID, insbesondere mittels der Identifizierungseinrichtung 23.

In dem gezeigten Ausführungsbeispiel sind die Informationen 3 optisch erfassbar.

Weiter ist in dem gezeigten Ausführungsbeispiel die Erfassungseinrichtung 21 eine optische Erfassungseinrichtung, insbesondere in Form einer Digitalkamera.

Zusätzlich ist in dem gezeigten Ausführungsbeispiel die Erfassungseinrichtung 21 eine benutzerbetätigbare Erfassungseinrichtung bzw. Eingabeeinrichtung, insbesondere in Form eines Touchscreens.

In alternativen Ausführungsbeispielen kann die Erfassungseinrichtung entweder eine optische Erfassungseinrichtung oder eine benutzerbetätigbare Erfassungseinrichtung sein.

Zudem weist in dem gezeigten Ausführungsbeispiel das System 20 ein mobiles Gerät 30, insbesondere in Form eines Smartphones, auf. Das mobile Gerät 30 weist die Erfassungseinrichtung 21 auf.

Des Weiteren weist das System 20 ein stationäres Gerät 35, insbesondere in Form eines Cloud-Servers, auf. Das stationäre Gerät 35 weist die Bestimmungseinrichtung 22 und die Identifizierungseinrichtung 23 auf.

Außerdem sind die Erfassungseinrichtung 21 und die Bestimmungseinrichtung 22 bzw. das mobile Gerät 30 und das stationäre Gerät 35 zum, insbesondere drahtlosen, Übertragen mindestens der erfassten räumlichen Reihenfolge RR der Informationen 3, in dem gezeigten Ausführungsbeispiel eines Bilds und/oder einer Benutzereingabe mindestens der räumlichen Reihenfolge RR der Informationen 3, ausgebildet, insbesondere übertragen.

Weiter weist das System 20 eine, insbesondere elektrische, Ausgabeeinrichtung 24 auf. Dies Ausgabeeinrichtung 24 ist zum, insbesondere automatischen, Ausgeben der identifizierten Eigenschaft EI ausgebildet.

Das Verfahren weist den Schritt auf: Ausgeben, insbesondere automatisches Ausgeben, der identifizierten Eigenschaft EI, insbesondere an einen Benutzer, insbesondere mittels der Ausgabeeinrichtung 24.

In dem gezeigten Ausführungsbeispiel ist die Ausgabeeinrichtung 24 eine optische Ausgabeeinrichtung, insbesondere in Form einer Anzeige.

Zudem weist das mobile Gerät 30 die Ausgabeeinrichtung 24 auf.

Des Weiteren sind Identifizierungseinrichtung 23 und die Ausgabeeinrichtung 24 bzw. das stationäre Gerät 35 und das mobile Gerät 30 zum, insbesondere drahtlosen, Übertragen der identifizierten Eigenschaft EI ausgebildet, insbesondere übertragen.

Außerdem ist das System 20 bzw. das Verfahren dazu ausgebildet, zu erkennen, ob die Werkzeugkette 1 verlängert oder verkürzt worden ist, und dies beim Identifizieren der Eigenschaft EI zu berücksichtigen, und/oder derart zu identifizieren, dass eine Verlängerung oder eine Verkürzung der Werkzeugkette 1 keinen, insbesondere sicherheitsrelevanten, Fehler verursacht, und/oder auszugeben, falls das Identifizieren nicht, insbesondere sicher, möglich ist.

Im Detail ist die Eigenschaft EI ein Typ TY und/oder ein Wert WE der Mehrzahl der Kettenglieder 2 und/oder eine Länge LE und/oder eine Echtheit EH der Werkzeugkette 1.

Weiter bildet die Information 3 des markierten Kettenglieds 2ID alleine keine Gesamtinformation zur Identifizierung der Eigenschaft EI.

Zudem ist die Information 3 minimal 0,5-mal so hoch wie das markierte Kettenglied 2ID und/oder minimal 0,5 cm hoch, insbesondere in einer Richtung z orthogonal zu einer Reihenrichtung x der Werkzeugkette 1.

Des Weiteren ist in dem gezeigten Ausführungsbeispiel die Information 3 in das markierte Kettenglied 2ID eingeprägt.

In alternativen Ausführungsbeispielen kann die Information in das markierte Kettenglied eingelasert sein.

Außerdem ist in Fig. 1 bis 5 die Information 3 ein Schriftzeichen 3', insbesondere ein Zahlzeichen 3".

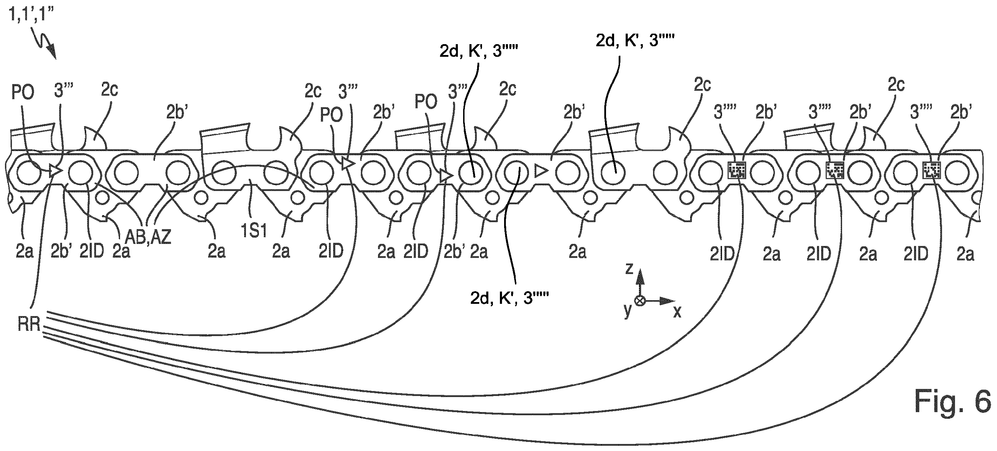

In Fig. 6 ist die die Information 3 ein Symbol 3‴ und/oder ein Code 3"", insbesondere ein 2D-Code, insbesondere ein DataMatrix-Code.

In alternativen Ausführungsbeispielen kann das Schriftzeichen ein Buchstabe sein.

Weiter weist in dem gezeigten Ausführungsbeispiel die Mehrzahl von Kettengliedern 2 verschiedene Typen von Kettengliedern 2a, 2b', 2b", 2c, 2d insbesondere Treibglieder 2a, insbesondere in der Reihenrichtung x rechte und linke, Verbindungsglieder 2b', 2b", Schneidglieder 2c und/oder Nietglieder 2d auf.

Jedes Nietglied 2d kann einen Niet aufweisen oder ein Niet sein und einander gegenüberliegende verbreiterte Nietköpfe K', K" aufweisen. Die Nietköpfe K', K" können einander entlang einer Richtung y gegenüberliegen, wobei die Richtung y orthogonal zu der Reihenrichtung x und der Richtung z verläuft. Wenigstens einer der Nietköpfe K', K" kann zum Verbinden anderer Kettenglieder 2a, 2b', 2b", 2c umformend verbreitert sein, insbesondere durch Vernieten, insbesondere zeitlich nach einem Anordnen jeweils zu verbindender Kettenglieder 2a, 2b', 2b", 2c in Montageposition.

Zusätzlich sind die markierten Kettenglieder 2ID gleichen Typs, insbesondere rechte Verbindungsglieder 2b'.

Zusätzlich weisen minimal 20 Prozent %, in Fig. 1 bis 5 100%, der Kettenglieder 2 eines der Typen, insbesondere der rechten Verbindungsglieder 2b', jeweils eine Information 3 auf.

Zudem bestimmt in Fig. 6 die räumliche Reihenfolge RR der Informationen 3 und mindestens ein Abstand AB, insbesondere eine Anzahl AZ von unmarkierten Kettengliedern 2, insbesondere des gleichen Typs wie die markierten Kettenglieder 2ID, in dem gezeigten Ausführungsbeispiel die rechten Verbindungsglieder 2b', zwischen den markierten Kettengliedern 2ID und/oder mindestens eine Position PO der Information 3 auf dem markierten Kettenglied 2ID zusammen die logische Reihenfolge LR der Informationen 3 und des mindestens einen Abstands AB und/oder der mindestens einen Position PO. Die logische Reihenfolge LR der Informationen 3 und des mindestens einen Abstands AB und/oder der mindestens einen Position PO bildet die Gesamtinformation ID.

Des Weiteren weist in Fig. 1 bis 5 die Mehrzahl von Kettengliedern 2 mindestens acht markierte Kettenglieder 2ID auf.

Zusätzlich sind die Informationen 3 aus einer Menge von mindestens acht verschiedenen Informationen 3, in Fig. 1 aus der Menge "*1*", "*2*", "*3*", "4", "*5*", "*6*", "*7*", "*8*".

Im Detail weisen in Fig. 1 die markierten Kettenglieder 2ID die Information 3 "*1*", "*8*", "*2*", "7", "4", "*5*", "*6*", "*3*" auf. Die räumliche Reihenfolge RR der Informationen 3 "*1*", "*8*", "*2*", "*7*", "*4*", "*5*", "*6*", "*3*" zusammen bestimmt die logische Reihenfolge LR der Informationen 3 "*18274563*" bestimmt. Die logische Reihenfolge LR der Informationen 3 "*18274563*" bildet die Gesamtinformation ID "18274563".

Falls in Fig. 1 ein Abstand AB, insbesondere die Anzahl AZ von unmarkierten Kettengliedern 2, insbesondere des gleichen Typs wie die markierten Kettenglieder 2ID, in dem gezeigten Ausführungsbeispiel die rechten Verbindungsglieder 2b', zwischen den markierten Kettengliedern 2ID aufweisend die Information 3 "*1*" und "*8*" eins wäre, wie in Fig. 6 gezeigt, dann könnte z.B. für den einen Abstand AB "*0*" zwischen die Informationen 3 "*1*" und "*8*" der markierten Kettengliedern 2ID einzufügen sein. Somit wäre die logische Reihenfolge LR der Informationen 3 und des mindestens einen Abstands AB "*108274563*". Somit wäre die Gesamtinformation ID "*108274563".*

Falls in Fig. 1 eine Position PO der Information 3 "*1*" mittig, eine Position PO der Information 3 "*8*" oben und eine Position PO der Information 3 "*2*" unten wäre, wie in Fig. 6 gezeigt, dann könnte z.B. für die Position PO mittig "*m*" nach der Information 3 "*1*", für die Position PO oben "*o*" nach der Information 3 "*8*" und für die Position PO unten "*u*" nach der Information 3 "*2*" einzufügen sein. Somit wäre die logische Reihenfolge LR der Informationen 3 und der mindestens einen Position PO "*1m8o2u74563*". Somit wäre die Gesamtinformation ID *"1m8o2u74563*".

Insbesondere könnten oder bräuchten der mindestens eine Abstand AB und/oder die mindestens eine Position PO mehr bei einer Ausführung der Erfassungseinrichtung 21 in Form einer optischen Erfassungseinrichtung und weniger bei einer Ausführung der Erfassungseinrichtung 21 in Form einer benutzerbetätigbaren Erfassungseinrichtung zu berücksichtigen sein.

Außerdem bestimmt in dem gezeigten Ausführungsbeispiel mindestens die räumliche Reihenfolge RR der Informationen 3 auf einer gemeinsamen Seite 1S1 der Werkzeugkette 1 die logische Reihenfolge LR mindestens der Informationen 3.

Beispielsweise kann wenigstens ein markiertes Kettenglied 2 ein Nietglied 2d sein, insbesondere alternativ oder zusätzlich zu markierten Kettengliedern 2 anderer Art. Hinsichtlich des durch das Nietglied 2d ausgebildeten markierten Kettenglied 2 kann die Information 3 an wenigstens einem der Nietköpfe K', K" dieses Nietglieds 2d vorhanden sein. Die an dem Nietkopf K, K' vorhandene Information 3 entspricht beispielsweise einer Nietkopfformgebung 3‴ʺ des Nietkopfs K', K", insbesondere einem Nietkopfdetail des Nietkopfs K', K". Die Nietkopfformgebung 3‴ʺ des Nietkopfs K', K" wird beispielsweise zeitlich vor einem Anordnen zu verbindender Kettenglieder 2 in Montageposition erzeugt. Alternativ oder zusätzlich kann die Nietkopfformgebung 3‴ʺ zeitlich nach oder bei einem Vernieten erzeugt werden.

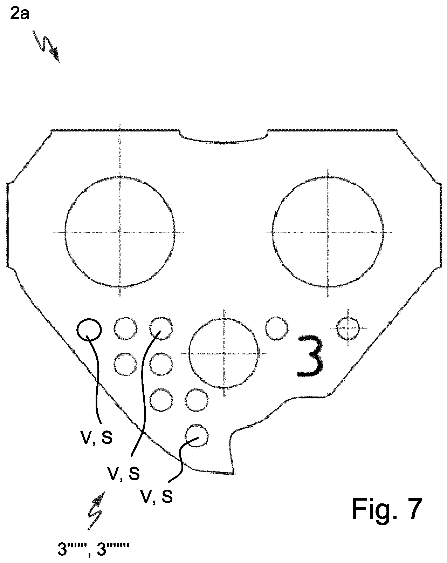

Beispielsweise kann wenigstens ein markiertes Kettenglied 2 ein Treibglied 2a mit Vertiefungen V, insbesondere Kalotten S, zur Schmiermittelaufnahme sein. In diesem Fall kann die Information 3 einer Anzahl 3‴‴ an Vertiefungen V dieses Treibglieds 2a entsprechen. Alternativ oder zusätzlich kann die Information 3 einer Formation 3‴ʺʺ der Vertiefungen V dieses Treibglieds 2a entsprechen. Fig. 7 zeigt beispielhaft ein derartiges Treibglied 2a mit einer Anzahl 3‴‴ an Vertiefungen, die in einer Formation 3‴ʺʺ angeordnet sind. Bei anderen Anzahlen 3""" und/oder Formationen 3‴ʺʺ kann beispielsweise ausgehend von dem Beispiel nach Fig. 7 auf ausgewählte Vertiefungen V verzichtet sein.

Beispielsweise können Informationen 3 aus wenigstens zwei Mengen von jeweils mindestens zwei verschiedenen Informationen 3 sein. Die Mengen können je einen gesonderten Zeichensatz ausbilden, wobei die Zeichensätze jeweils auf einem gemeinsamen Zeichentyp basieren. Die Informationen 3 aus wenigstens zwei Mengen können beispielsweise eine gemeinsame räumliche Reihenfolge RR oder parallele räumliche Reihenfolgen RR ausbilden. Auf diese Weise kann eine besonders hohe Informationsdichte erreicht werden, insbesondere mit Bezug auf einen Erfassungsbereich, insbesondere der Erfassungseinrichtung 21 zum Erfassen der mindestens räumlichen Reihenfolge RR.

Beispielsweise weist die Werkzeugkette 1 einen Führungsbereich F auf, der frei ist von Informationen 3, insbesondere Informationszeichen. Der Führungsbereich F kann an einer Führungsschiene 11 eines Kettenwerkzeugs 10 führbar sein, insbesondere wenn die Werkzeugkette 1 von dem Kettenwerkzeug 10 aufgewiesen ist. Wenn die Werkzeugkette 1 an der Führungsschiene 11 geführt ist, kann der Führungsbereich F der Werkzeugkette 1 durch die Führungsschiene 11 verdeckt sein, vgl. Fig. 5. Mit anderen Worten: Die Informationen 3, insbesondere die Informationszeichen, können derart außerhalb des Führungsbereichs F vorhanden sein, dass sie auch bei an der Führungsschiene 11 geführter Werkzeugkette 1, insbesondere von außen her, erfassbar sind. Insbesondere sind etwaige Markierungen an der Werkzeugkette 1 innerhalb des Führungsbereichs F in diesem Beispielsszenario keine Informationen 3. Falls die Werkzeugkette 1 wie beispielsweise gemäß Fig. 5 als Endloskette ausgebildet ist kann der Führungsbereich F radial innen angeordnet sein.

Beispielsweise kann bei Durchführung von Schritt b) und/oder Schritt c) des oben bereits beispielhaft erläuterten Verfahrens eine mehrstufige Datenbankabfrage erfolgen. Dabei kann die mehrstufige Datenbankabfrage eine erste Abfragestufe und eine zeitlich auf die erste Abfragestufe folgende zweite Abfragestufe umfassen. Es versteht sich, dass sich an die zweite Abfragestufe weitere Abfragestufen anschließen können. Die Abfragestufen können sich beispielsweise hinsichtlich einer Komplexität und/oder Erfassungsgeschwindigkeit der gemäß Schritt a) erfassten Informationen 3, insbesondere Informationszeichen, unterscheiden. So kann in der ersten Abfragestufe die Datenbankabfrage beispielsweise für Informationen 3, insbesondere Informationszeichen, erfolgen, die relativ schnell erfassbar sind und/oder eine relativ geringe Komplexität aufweisen. In der zweiten Abfragestufe kann die Datenbankabfrage beispielsweise für Informationen 3, insbesondere Informationszeichen, erfolgen, die weniger schnell erfassbar und/oder komplexer sind als die in der ersten Abfragestufe behandelten Informationen 3, insbesondere Informationszeichen. Beispielsweise können Schriftzeichen, insbesondere Zahlzeichen und/oder Buchstaben, schneller erfassbar und/oder weniger komplex sein als die Formation von Vertiefungen V, insbesondere Kalotten S, zur Schmiermittelaufnahme.

Wie die gezeigten und oben erläuterten Ausführungsbeispiele deutlich machen, stellt die Erfindung eine vorteilhafte Werkzeugkette bereit, wobei die Werkzeugkette eine Identifizierung einer Eigenschaft der Werkzeugkette ermöglicht. Des Weiteren stellt die Erfindung ein vorteilhaftes Kettenwerkzeug aufweisend eine solche Werkzeugkette, ein vorteilhaftes Verfahren zum Identifizieren einer Eigenschaft einer solchen Werkzeugkette und ein vorteilhaftes System zum Identifizieren einer Eigenschaft einer solchen Werkzeugkette bereit.

## Patentansprüche

1. Werkzeugkette (1),
- wobei die Werkzeugkette (1) eine Mehrzahl von räumlich aneinandergereihten Kettengliedern (2) aufweist,
- wobei die Mehrzahl von Kettengliedern (2) mindestens zwei markierte Kettenglieder (2ID) aufweist, wobei die markierten Kettenglieder (2ID) jeweils eine Information (3) aufweisen,
- wobei mindestens eine räumliche Reihenfolge (RR) der Informationen (3) zusammen eine logische Reihenfolge (LR) mindestens der Informationen (3) bestimmt, wobei die logische Reihenfolge (LR) mindestens der Informationen (3) eine Gesamtinformation (ID) zur Identifizierung einer Eigenschaft (EI) der Werkzeugkette (1) bildet,
- wobei die Eigenschaft (EI) ein Typ (TY) und/oder ein Wert (WE) der Mehrzahl der Kettenglieder (2) und/oder eine Länge (LE) und/oder eine Echtheit (EH) der Werkzeugkette (1) ist,
- wobei die Information (3) des markierten Kettenglieds (2ID) alleine keine Gesamtinformation zur Identifizierung der Eigenschaft (EI) bildet, und
- wobei die räumliche Reihenfolge (RR) der Informationen (3) und mindestens ein Abstand (AB) zwischen den markierten Kettengliedern (2ID) und/oder mindestens eine Position (PO) der Information (3) auf dem markierten Kettenglied (2ID) zusammen die logische Reihenfolge (LR) der Informationen (3) und des mindestens einen Abstands (AB) und/oder der mindestens einen Position (PO) bestimmt, wobei die logische Reihenfolge (LR) der Informationen (3) und des mindestens einen Abstands (AB) und/oder der mindestens einen Position (PO) die Gesamtinformation (ID) bildet.

2. Werkzeugkette (1) nach dem vorhergehenden Anspruch,
- wobei die Information (3) minimal 0,5-mal so hoch wie das markierte Kettenglied (2ID) ist, und/oder
- wobei die Information (3) minimal 0,5 cm hoch ist.

3. Werkzeugkette (1) nach einem der vorhergehenden Ansprüche,
- wobei die Information (3) in das markierte Kettenglied (2ID) eingeprägt oder eingelasert ist.

4. Werkzeugkette (1) nach einem der vorhergehenden Ansprüche,
- wobei die Information (3) mindestens ein Schriftzeichen (3'), insbesondere ein Zahlzeichen (3") und/oder ein Buchstabe, und/oder mindestens ein Symbol (3"') und/oder mindestens ein Code (3""), insbesondere ein 2D-Code, insbesondere ein DataMatrix-Code, ist.

5. Werkzeugkette (1) nach einem der vorhergehenden Ansprüche,
- wobei die Mehrzahl von Kettengliedern (2) verschiedene Typen von Kettengliedern (2a, 2b', 2b", 2c), insbesondere Treibglieder (2a), Verbindungsglieder (2b', 2b") und/oder Schneidglieder (2c), aufweist,
- wobei die markierten Kettenglieder (2ID) gleichen Typs, insbesondere Verbindungsglieder (2b', 2b"), sind, und/oder
- wobei minimal 20 %, insbesondere minimal 90 %, insbesondere 100%, der Kettenglieder (2) eines der Typen, insbesondere der Verbindungsglieder (2b', 2b"), jeweils eine Information (3) aufweisen.

6. Werkzeugkette (1) nach einem der vorhergehenden Ansprüche, insbesondere nach Anspruch 5,
- wobei die räumliche Reihenfolge (RR) der Informationen (3) und eine Anzahl (AZ) von unmarkierten Kettengliedern (2), insbesondere des gleichen Typs wie die markierten Kettenglieder (2ID), zwischen den markierten Kettengliedern (2ID) und/oder die mindestens eine Position (PO) der Information (3) auf dem markierten Kettenglied (2ID) zusammen die logische Reihenfolge (LR) der Informationen (3) und des mindestens einen Abstands (AB) und/oder der mindestens einen Position (PO) bestimmt.

7. Werkzeugkette (1) nach einem der vorhergehenden Ansprüche,
- wobei die Mehrzahl von Kettengliedern (2) mindestens acht markierte Kettenglieder (2ID) aufweist, und/oder
- wobei die Informationen (3) aus einer Menge von mindestens acht verschiedenen Informationen (3) sind.

8. Werkzeugkette (1) nach einem der vorhergehenden Ansprüche,
- wobei die Werkzeugkette (1) eine Schneidkette (1'), insbesondere eine Sägekette (1"), ist.

9. Werkzeugkette (1) nach einem der vorhergehenden Ansprüche,
- wobei mindestens die räumliche Reihenfolge (RR) der Informationen (3) auf einer gemeinsamen Seite (1S1) der Werkzeugkette (1) die logische Reihenfolge (LR) mindestens der Informationen (3) bestimmt.

10. Kettenwerkzeug (10), insbesondere handgeführtes und/oder motorangetriebenes Kettenwerkzeug, wobei das Kettenwerkzeug (10) aufweist:
- eine Werkzeugkette (1) nach einem der vorhergehenden Ansprüche.

11. Kettenwerkzeug (10) nach Anspruch 10,
- wobei das Kettenwerkzeug (10) ein Garten-, Forst- und/oder Bau-Kettenwerkzeug (10'), insbesondere ein Schneidwerkzeug (10"), insbesondere eine Kettensäge (10‴), ist.

12. Verfahren zum Identifizieren einer Eigenschaft (EI) einer Werkzeugkette (1) nach einem der Ansprüche 1 bis 9 und/oder einer Werkzeugkette (1) aufgewiesen von einem Kettenwerkzeug (10) nach Anspruch 10 oder 11, wobei das Verfahren die Schritte aufweist:
a) Erfassen mindestens der räumlichen Reihenfolge (RR) der Informationen (3),
b) Bestimmen der logischen Reihenfolge (LR) mindestens der Informationen (3) basierend auf mindestens der erfassten räumlichen Reihenfolge (RR) der Informationen (3), wobei die logische Reihenfolge (LR) mindestens der Informationen (3) die Gesamtinformation (ID) zur Identifizierung der Eigenschaft (El) der Werkzeugkette (1) bildet, und
c) Identifizieren der Eigenschaft (El) der Werkzeugkette (1) basierend auf der gebildeten Gesamtinformation (ID).

13. System (20) zum Identifizieren einer Eigenschaft (EI) einer Werkzeugkette (1) nach einem der Ansprüche 1 bis 9 und/oder einer Werkzeugkette (1) aufgewiesen von einem Kettenwerkzeug (10) nach Anspruch 10 oder 11, wobei das System (20) aufweist:
- eine Erfassungseinrichtung (21), wobei die Erfassungseinrichtung (21) zum Erfassen der mindestens räumlichen Reihenfolge (RR) der Informationen (3) ausgebildet ist,
- eine Bestimmungseinrichtung (22), wobei die Bestimmungseinrichtung (22) zum Bestimmen der logischen Reihenfolge (LR) mindestens der Informationen (3) basierend auf mindestens der erfassten räumlichen Reihenfolge (RR) der Informationen (3) ausgebildet ist, wobei die logische Reihenfolge (LR) mindestens der Informationen (3) die Gesamtinformation (ID) zur Identifizierung der Eigenschaft (El) der Werkzeugkette (1) bildet, und
- eine Identifizierungseinrichtung (23), wobei die Identifizierungseinrichtung (23) zum Identifizieren der Eigenschaft (El) der Werkzeugkette (1) basierend auf der gebildeten Gesamtinformation (ID) ausgebildet ist.

## Claims

1. Tool chain (1),
- wherein the tool chain (1) has a plurality of chain links (2) arranged in a row,
- wherein the plurality of chain links (2) comprises at least two marked chain links (2ID), wherein the marked chain links (2ID) each comprise information (3),
- wherein at least one spatial sequence (RR) of the information (3) together determines a logical sequence (LR) of at least the information (3), wherein the logical sequence (LR) of at least the information (3) forms overall information (ID) for identifying a property (EI) of the tool chain (1),
- wherein the property (EI) is a type (TY) and/or a value (WE) of the plurality of chain links (2) and/or a length (LE) and/or an authenticity (EH) of the tool chain (1),
- wherein the information (3) of the marked chain link (2ID) alone does not constitute overall information for identifying the property (EI), and
- wherein the spatial sequence (RR) of the information (3) and at least one distance (AB) between the marked chain links (2ID) and/or at least one position (PO) of the information (3) on the marked chain link (2ID) together determine the logical sequence (LR) of the information (3) and of the at least one distance (AB) and/or of the at least one position (PO), wherein the logical sequence (LR) of the information (3) and of the at least one distance (AB) and/or of the at least one position (PO) forms the overall information (ID).

2. Tool chain (1) according to the preceding claim,
- wherein the information (3) is at least 0.5 times as high as the marked chain link (2ID), and/or
- wherein the information (3) is at least 0.5 cm high.

3. Tool chain (1) according to either of the preceding claims,
- wherein the information (3) is embossed or lasered into the marked chain link (2ID).

4. Tool chain (1) according to one of the preceding claims,
- wherein the information (3) is at least one character (3'), in particular a numeral (3") and/or a letter, and/or at least one symbol (3‴) and/or at least one code (3ʺʺ), in particular a 2D code, in particular a Data Matrix code.

5. Tool chain (1) according to one of the preceding claims,
- wherein the plurality of chain links (2) comprises different types of chain links (2a, 2b', 2b", 2c), in particular drive links (2a), connecting links (2b', 2b") and/or cutting links (2c),
- wherein the marked chain links (2ID) are of the same type, in particular connecting links (2b', 2b"), and/or
- wherein at least 20%, in particular at least 90%, in particular 100%, of the chain links (2) of one of the types, in particular of the connecting links (2b', 2b"), each have information (3).

6. Tool chain (1) according to one of the preceding claims, in particular according to Claim 5,
- wherein the spatial sequence (RR) of the information (3) and a number (AZ) of unmarked chain links (2), in particular of the same type as the marked chain links (2ID), between the marked chain links (2ID) and/or the at least one position (PO) of the information (3) on the marked chain link (2ID) together determine the logical sequence (LR) of the information (3) and of the at least one distance (AB) and/or of the at least one position (PO).

7. Tool chain (1) according to one of the preceding claims,
- wherein the plurality of chain links (2) comprises at least eight marked chain links (2ID), and/or
- wherein the information (3) is from a set of at least eight different pieces of information (3).

8. Tool chain (1) according to one of the preceding claims,
- wherein the tool chain (1) is a cutting chain (1'), in particular a saw chain (1").

9. Tool chain (1) according to one of the preceding claims,
- wherein at least the spatial sequence (RR) of the information (3) on a common side (1S1) of the tool chain (1) determines the logical sequence (LR) of at least the information (3).

10. Chain tool (10), in particular a hand-guided and/or motor-driven chain tool, wherein the chain tool (10) comprises:
- a tool chain (1) according to one of the preceding claims.

11. Chain tool (10) according to Claim 10,
- wherein the chain tool (10) is a garden, forestry and/or construction chain tool (10'), in particular a cutting tool (10"), in particular a chainsaw (10‴).

12. Method for identifying a property (EI) of a tool chain (1) according to one of Claims 1 to 9 and/or a tool chain (1) exhibited by a chain tool (10) according to Claim 10 or 11, wherein the method comprises the steps of:
a) detecting at least the spatial sequence (RR) of the information (3),
b) determining the logical sequence (LR) of at least the information (3) based on at least the detected spatial sequence (RR) of the information (3), wherein the logical sequence (LR) of at least the information (3) forms the overall information (ID) for identifying the property (EI) of the tool chain (1), and
c) identifying the property (EI) of the tool chain (1) based on the overall information (ID) formed.

13. System (20) for identifying a property (EI) of a tool chain (1) according to one of Claims 1 to 9 and/or a tool chain (1) exhibited by a chain tool (10) according to Claim 10 or 11, wherein the system (20) comprises:
- a detection device (21), wherein the detection device (21) is designed to detect the at least spatial sequence (RR) of the information (3),
- a determination device (22), wherein the determination device (22) is designed to determine the logical sequence (LR) of at least the information (3) based on at least the detected spatial sequence (RR) of the information (3), wherein the logical sequence (LR) of at least the information (3) forms the overall information (ID) for identifying the property (EI) of the tool chain (1), and
- an identification device (23), wherein the identification device (23) is designed to identify the property (EI) of the tool chain (1) based on the overall information (ID) formed.

## Revendications

1. Chaîne d'outils (1),
- la chaîne d'outils (1) comportant une multitude de maillons (2) alignés spatialement,
- la multitude de maillons (2) comportant au moins deux maillons marqués (2ID), les maillons marqués (2ID) comportant chacun une information (3),
- au moins un ordre spatial (RR) des informations (3) déterminant ensemble un ordre logique (LR) d'au moins les informations (3), l'ordre logique (LR) d'au moins les informations (3) formant une information globale (ID) pour identifier une propriété (EI) de la chaîne d'outils (1),
- la propriété (EI) étant un type (TY) et/ou une valeur (WE) de la multitude de maillons (2) et/ou une longueur (LE) et/ou une authenticité (EH) de la chaîne d'outils (1),
- l'information (3) du maillon marqué (2ID) ne formant à elle seule aucune information globale pour identifier la propriété (EI), et
- l'ordre spatial (RR) des informations (3) et au moins une distance (AB) entre les maillons marqués (2ID) et/ou au moins une position (PO) des informations (3) sur le maillon marqué (2ID) déterminant ensemble l'ordre logique (LR) des informations (3) et de l'au moins une distance (AB) et/ou l'au moins une position (PO), l'ordre logique (LR) des informations (3) et de l'au moins une distance (AB) et/ou de l'au moins une position (PO) formant l'information globale (ID).

2. Chaîne d'outils (1) selon la revendication précédente,
- l'information (3) ayant une hauteur égale à au moins 0,5 fois celle du maillon marqué (2ID), et/ou
- l'information (3) ayant une hauteur de 0,5 cm au minimum.

3. Chaîne d'outils (1) selon l'une des revendications précédentes,
- l'information (3) étant imprimée ou appliquée au laser dans le maillon marqué(2ID).

4. Chaîne d'outils (1) selon l'une des revendications précédentes,
- l'information (3) étant au moins un caractère (3'), en particulier un caractère numérique (3") et/ou une lettre et/ou au moins un symbole (3‴) et/ou au moins un code (3""), en particulier un code 2D, en particulier un code DataMatrix.

5. Chaîne d'outils (1) selon l'une des revendications précédentes,
- la multitude de maillons (2) comprenant différents types de maillons (2a, 2b', 2b', 2c), en particulier des maillons d'entraînement (2a), des éléments de liaison (2b', 2b") et/ou des éléments de coupe (2c),
- les maillons marqués (2ID) étant du même type, en particulier des éléments de liaison (2b', 2b"), et/ou
- au moins 20 %, en particulier au moins 90 %, en particulier 100 %, des maillons (2) d'un des types, en particulier des éléments de liaison (2b', 2b"), comportant chacun une information (3).

6. Chaîne d'outils (1) selon l'une des revendications précédentes, en particulier selon la revendication 5,
- l'ordre spatial (RR) des informations (3) et un nombre (AZ) de maillons non marqués (2), en particulier du même type que les maillons marqués (2ID), entre les maillons marqués (2ID) et/ou l'au moins une position (PO) de l'information (3) sur le maillon marqué (2ID) déterminant ensemble l'ordre logique (LR) des informations (3) et de l'au moins une distance (AB) et/ou de l'au moins une position (PO).

7. Chaîne d'outils (1) selon l'une des revendications précédentes,
- la multitude de maillons (2) comportant au moins huit maillons marqués (2ID), et/ou
- les informations (3) étant issues d'une quantité d'au moins huit informations (3) différentes.

8. Chaîne d'outils (1) selon l'une des revendications précédentes,
- la chaîne d'outils (1) étant une chaîne de coupe (1'), en particulier une chaîne de scie (1").

9. Chaîne d'outils (1) selon l'une des revendications précédentes,
- au moins l'ordre spatial (RR) des informations (3) sur un côté commun (1S1) de la chaîne d'outils (1) déterminant l'ordre logique (LR) d'au moins les informations (3).

10. Outil à chaîne (10), en particulier outil à chaîne guidé manuellement et/ou motorisé, l'outil à chaîne (10) comportant :
- une chaîne d'outils (1) selon l'une des revendications précédentes.

11. Outil à chaîne (10) selon la revendication 10,
- l'outil à chaîne (10) étant un outil à chaîne (10') de jardinage, de sylviculture et/ou de construction, en particulier un outil de coupe (10"), en particulier une scie à chaîne (10‴).

12. Procédé pour identifier une propriété (EI) d'une chaîne d'outils (1) selon l'une des revendications 1 à 9 et/ou d'une chaîne d'outils (1) comportant un outil à chaîne (10) selon la revendication 10 ou 11, le procédé comportant les étapes :
a) détection d'au moins l'ordre spatial (RR) des informations (3),
b) détermination de l'ordre logique (LR) d'au moins les informations (3) sur la base d'au moins l'ordre spatial (RR) détecté des informations (3), l'ordre logique (LR) au moins des informations (3) formant l'information globale (ID) pour identifier la propriété (EI) de la chaîne d'outils (1), et
c) identification de la propriété (EI) de la chaîne d'outils (1) sur la base de l'information globale (ID) formée.

13. Système (20) pour identifier une propriété (EI) d'une chaîne d'outils (1) selon l'une des revendications 1 à 9 et/ou d'une chaîne d'outils (1) comportant un outil à chaîne (10) selon la revendication 10 ou 11, le système (20) comportant :
- un dispositif de détection (21), le dispositif de détection (21) étant formé pour détecter l'au moins un ordre spatial (RR) des informations (3),
- un dispositif de détermination (22), le dispositif de détermination (22) étant formé pour déterminer l'ordre logique (LR) au moins des informations (3) sur la base d'au moins l'ordre spatial (RR) détecté des informations (3), l'ordre logique (LR) d'au moins les informations (3) formant l'information globale (ID) pour identifier la propriété (EI) de la chaîne d'outils (1), et
- un dispositif d'identification (23), le dispositif d'identification (23) étant formé pour identifier la propriété (EI) de la chaîne d'outils (1) sur la base de l'information globale (ID) formée.
